(19) Europäisches Patentamt
European Patent Office
Office européen des brevets

(11) **EP 4 023 711 A1**

(12) **EUROPEAN PATENT APPLICATION**

(43) Date of publication:
06.07.2022 Bulletin 2022/27

(21) Application number: 20217586.5

(22) Date of filing: 29.12.2020

(51) International Patent Classification (IPC):
*C08L 23/08* (2006.01)   *H01B 3/44* (2006.01)
*C08L 43/04* (2006.01)   *C08F 210/16* (2006.01)
*C08K 3/22* (2006.01)   *C08K 3/26* (2006.01)
*C08K 5/00* (2006.01)

(52) Cooperative Patent Classification (CPC):
(C-Sets available)
**H01B 3/44; C08L 23/0815;** C08F 210/16;
C08K 5/0025; C08K 2003/2217; C08K 2003/265

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: Borealis AG
1020 Vienna (AT)

(72) Inventors:
• **EFRAIMSSON, Lars**
44486 Stenungsund (SE)
• **LINDBOM, Lena**
44486 Stenungsund (SE)
• **SULTAN, Bernt-Ake**
44486 Stenungsund (SE)

(74) Representative: **Kador & Partner PartG mbB**
**Corneliusstraße 15**
**80469 München (DE)**

(54) **HIGHLY TRACK RESISTANT POLYETHYLENE COMPOUNDS FOR WIRE AND CABLE APPLICATIONS**

(57) The present invention relates to a crosslinkable polymer composition comprising (A) a high density ethylene homo- or copolymer having a density, determined according to ISO 1183, of at least 930 kg/m$^3$, and (B) a copolymer of ethylene with a silane groups-containing comonomer having a content of silane groups-containing comonomer of not more than 4.0 wt%, wherein the polymer composition passes the tracking resistance test, determined according to IEC60587 (2007), method 2A at 4.5kV for 1h and 4.75 kV for 1h on compression molded plaques prepared according to ISO 11357. The present invention further relates to a track resistant wire or cable, preferably a power cable or an optical cable comprising at least one layer of the above polymer composition or to the use of the polymer composition in a wire or cable for increasing track resistance, and/or for increasing fire retardancy along the length of the wire or cable. The present invention further relates to a method for manufacturing the above polymer composition, comprising a step of compounding or dry blending the high density ethylene homo- or copolymer (A) and the copolymer of ethylene with a silane groups-containing comonomer (B).

EP 4 023 711 A1

(52) Cooperative Patent Classification (CPC): (Cont.)

C-Sets
**C08F 210/16, C08F 2/001;**
**C08F 210/16, C08F 4/6546;**
**C08L 23/0815, C08L 23/0846;**
**C08L 23/0815, C08L 43/04;**
**C08L 23/0815, C08L 43/04, C08K 3/22,**
**C08K 3/26, C08K 5/098;**
C08F 210/16, C08F 210/14, C08F 2500/04,
C08F 2500/07, C08F 2500/12

**Description**

The present invention relates to improved track resistant polymer compositions comprising a copolymer of ethylene and hexene for wire and cables, its use in a wire or cable for increasing track resistance, track resistant wires and cables comprising a layer of the polymer composition, and a method for the production of such polymer compositions.

**Background of the Invention**

Improved track resistant materials are especially desired in covered conductor overhead lines (OH) which are liable to damages due to fires, voltage drops power cuts, and mechanical damages such as falling trees or contact with flying objects. On the other hand, covered conductor overhead lines have many advantages compared to AC cables laid in the ground, because of the cable capacitance that limits the lengths of AC cables. Higher voltage give shorter lengths. AC cables are limited to net lengths of 5-10 km for system voltages over 12 kV. Therefore, aerial lines are still dominating for long distance power nets.

A covered conductor line can have very narrow distances between the phases and can therefore withstand trees falling on the line better. Such power lines can be built closer to trees and dispense with the need of scarifying forest areas. A further problem in dusty areas is that tracking deteriorates or destroys the line besides the insulators, and the line may break and fall to the ground.

Voltage drop in the line depends on the resistance of the conductors and the inductance between the lines. For aerial lines in the countryside, the inductance voltage drop can be the dominating factor in the line.

Narrow distance between conductors also lower the inductance of the aerial line and therefore the inductance voltage drop with covered conductors is reduced with around 50% compared to a bare line. Longer cable lines with lower system voltage can be build This gives an easier network design and reduces costs.

Covered conductors in cable lines are common and have been used for over 30 years. It has been found that sparks appear on the surface of the cable in long term use, especially in areas with conductive dust and/or trees/branches coming in contact with the cable lines. These sparks on the surface of cables, also called tracking, destroy the insulation of the cables, resulting in burning of the counductor and finally in cable failures. Therefore, higher track resistance is highly desired by the network and power plant utilities.

Nowadays, power nets are desired which may increase track resistance to greater than 3 kV up to 5.75 kV track resistance or even more on OH lines. A further desire is to increase fire resistance, so that fire is not spread along the line.

Plastic covered overhead conductors without metal sheaths, PAS and BLL/BLX conductors, were developed in order to improve the reliability of the distribution and transfer of electricity. These covered conductor systems offer also considerable space savings as the space required is approximately 40% less compared to a standard bare line. Covered conductor (CC) line construction costs are moderate, considering their advantages over traditional bare line structures.

Polymer compositions fulfilling tracking resistance of 4.5 kV are known, mostly those containing carbon black. However, those black compositions heat up in the sun and may add to the above tracking problems or may even cause fires due to low heat resistance.

Optical cables contain optical fibres for transmission of signals for any form of communication, data exchange or control purpose. For example, in GB A2 2 193 583 one type of such an optical cable is described. Besides optical fibres, optical cables comprise an outer sheath to protect these fibres. The outer sheath usually is based on a polymeric material such as a polyolefin, in particular polyethylene or a copolymer of ethylene, in which the ethylene monomer constitutes the greater part of the total mass of the polymer. The cable sheath must cope with the requirements of an easy production and good mechanical properties, such as tensile strength and elongation at break, especially, at increased temperatures up to or over 100° C. Further, the outer sheath should also have low heat deformation and good tracking resistance.

In particular, a good tracking resistance of the sheath is of high interest, because for practical reasons optical cables most often are installed adjacent to power cables. These power cables by their high voltages, particularly over 130 kV, generate strong electrical fields and thereby induce electrical voltages across regions of the sheaths of the neighbouring optical cables. This leads to creeping currents by tracking and further to local breakdown of the sheath, especially under damp conditions which is known as dry band arcing. Tracking is defined as the process that produces a track as a result of the action of electric arcs.

The arc concentrates sufficient power to produce tracks and enough energy for the growth of the tracks. Failure occurs when the track extends enough to span the remaining distance between two electrodes or earth connection and therefore becomes a path of localised degradation on the surface of an insulating material. The tracking resistance is measured according to the inclined plane tracking test. Details of the applied test procedure according to this method are given in the Examples section arcing.

EP 1 267 189 A1 discloses an track resistant optical cable comprising at least one optical fibre and an outer sheath which comprises a polymeric material, preferably a bimodal ethylene butene copolymer, characterized in that the polymeric material forms a matrix for the sheath and consists of a multimodal olefin polymer obtained by coordination catalysed polymerization, and the total composition of the sheath comprises 15-40% by weight of magnesium hydroxide and/or aluminum hydroxide and 0.01-0.9 % by weight of carbon black.

WO 93/05424 A1 discloses a track resistant optical cable containing at least one optical fiber, and an outer sheath of polymeric material, characterized in that the polymeric material forms a matrix consisting of a linear polyethylene blended with 0 to at most 20 % by weight of a branched LDPE, based on the weight of the linear polyethylene, and in that the total composition of the sheath material contains 15-30 % by weight of magnesium hydroxide or aluminum hydroxide.

JP-2004-010864 A discloses a track resistant water-crosslinkable polymer composition comprising 8 to 50 pbw of magnesium hydroxide (B) and 0.2 to 1.1 pbw of carbon black (C) added to 100 pbw of an ethylene-based polymer (A) consisting mainly of a ethylene-$\alpha$-olefin copolymer. The polymer composition comprises 0.1 to 10 pbw of an unsaturated alkoxysilane (D), 0.01 to 1 pbw of an organic peroxide (E) and 0.001 to 1 pw of a silanol condensation catalyst (F).

Each of the above polymer compositions and cables suffer from low heat resistance, electrical safety problems, short circuits and damages, and mechanical problems such as insufficient tensile strength and elongation at break. Moreover, the demands for increased track resistance of the materials are strong in the relevant markets.

The present invention has the object to design a track resistant polymer composition for wire and cable applications and its use in a layer of a wire or cable, which polymer composition has an improved tracking resistance in combination with good mechanical properties, UV resistance, heat resistance, and or fire retardancy.

## Summary of the Invention

The present invention found that the above objects can be achieved by a crosslinkable polymer composition comprising:

(A) a high density ethylene homo- or copolymer having a density, determined according to ISO 1183, of at least 930 kg/m$^3$, and

(B) a copolymer of ethylene with a silane groups-containing comonomer having a content of silane groups-containing comonomer of not more than 4.0 wt%,

wherein the polymer composition passes the tracking resistance test, determined according to IEC60587 (2007), method 2A at 4.5kV for 1h and 4.75 kV for 1h on compression molded plaques prepared according to ISO 11357 and as described in the example section.

Preferably, the polymer composition passes the tracking resistance test, determined according to IEC60587 (2007), method 2A at 5.0 kV for 1h and 5.25 kV for 1h or even at 5.75 kV for 1 h and at 6 kV for 1h, on compression molded plaques prepared according to ISO 11357 and as described herein.

The objects can further be achieved by a track resistant wire or cable, preferably a power cable or an optical cable comprising at least one layer of the above polymer composition or by the use of the polymer composition in a wire or cable for increasing track resistance, and/or for increasing fire retardancy along the length of the wire or cable.

The present invention further relates to a method for manufacturing the above polymer composition, comprising a step of compounding or dry blending the high density ethylene homo- or copolymer (A) and the copolymer of ethylene with a silane groups-containing comonomer (B).

## Detailed Description of the Invention

The crosslinkable polymer composition of the present invention comprises a high density ethylene homo- or copolymer having a density, determined according to ISO 1183, of at least 930 kg/m$^3$, preferably in the range of from 930 to 960 kg/m$^3$, even more preferably 945 to 955 kg/m$^3$.

Preferably, the polymer composition of the present invention comprises a multimodal copolymer of ethylene and hexene having a density of from 930 to 970 kg/m$^3$ and a melt flow rate MFR$_2$, determined according to ISO 1133 at a load of 2.16 kg at 190 °C, of not more than 0.4 g/10 min, more preferably not more than 0.2 g/10 min, even more preferably not more than 0.1 g/10 min.

The high density ethylene homo- or copolymer may preferably be a copolymer of ethylene and hexene, which more preferably is a multimodal polyethylene having at least two polymer fractions present in the polymer, each polymer fraction having a different weight average molecular weight. The expression "modality of a polymer" refers to the form of its molecular weight distribution (MWD) curve, i. e. the appearance of the graph of the polymer weight fraction as a function of its molecular weight. If the polymer is produced in a sequential step process e.g. by utilizing reactors coupled in series and using different conditions in each reactor, the different polymer fractions produced in the different reactors will each have their own molecular weight distribution which may considerably differ from one another. The molecular weight distribution curve of the resulting final polymer can be looked at as the superposition of the molecular weight distribution curves of the polymer fractions which will accordingly show two or more distinct maxima or at least be distinctly broadened compared with the curves for the individual fractions. A polymer showing such a molecular weight distribution curve is called "multimodal". Multimodal polymers can be produced according to several processes, which are described e.g. in WO 92/12182. It is known to produce multimodal, in particular bi- or trimodal, olefin polymers, preferably ethylene polymers, in two or more reactors connected in series. Examples thereof are described in EP 040 992, EP 041 796, EP 022 376, EP 0887379 and WO 92/12182. According to the disclosure of these documents, each of the polymerisation stages can be carried out in liquid, slurry or gas phase.

The multimodal copolymer of ethylene and hexene preferably is bimodal. Such a bimodal polymer comprises two polymer fractions present in the polymer, each having different weight average molecular weights. These fractions are termed in the following sometimes fraction (A), and (B), respectively.

An ethylene copolymer in this regard denotes a polymer comprising at least 50 wt% of ethylene monomer units.

Fraction (A) may be an ethylene homopolymer or the ethylene copolymer with the lowest comonomer content of the fractions. It is preferred that fraction (A) is an ethylene homopolymer.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

In a preferred embodiment of the present invention, sometimes called embodiment A in the following, the copolymer of ethylene and hexene may be bimodal consisting of polymer fractions (A) and (B), optionally further comprising a prepolymer fraction in an amount of up to 10 wt.%, more preferably up to 7 wt.%, and most preferably up to 5 wt.% of the total polymer. A person skilled in the art will understand that measurements as to properties of the polymer require the presence of stabilizers.

In embodiment A, fraction (A) of the copolymer may be an ethylene homo- or copolymer. Fraction (A) preferably has a density of 960 to 980 kg/m$^3$.

Furthermore, preferably, fraction (A) of the copolymer has an MFR$_2$ as measured in accordance with ISO 1133 of 150 to 600 g/10min, more preferably of 175 to 550 g/10min and most preferably of 200 to 550 g/10min.

Fraction (A) and/or fraction (B) may consist of a single polymer fraction made in one reactor, or may consists of two or more partial fractions made in separate reactors.

It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

If one or more fractions of the base resin consist of partial fractions produced in separate reactors, it is preferred that the reaction conditions are chosen so that essential the same polymer is produced therein. This means that if, for example and preferably, the base resin consists of fraction (A) and (B) and fraction (A) is produced as two partial fractions in two separate loop reactors under conditions so that essentially the same or the same polymer is produced therein, the polymer will still be a bimodal resin as it consists of two fractions of different polymers.

Furthermore, in the polyethylene composition the copolymer of ethylene and hexene may preferably have a weight average molecular weight Mw 150,000 to 350,000 g/mol, more preferably of 200,000 to 320,000 g/mol.

The copolymer of ethylene and hexene preferably has a molecular weight distribution Mw/Mn of from 20 to 35, more preferably from 22 to 31.

Preferably, the copolymer of ethylene and hexene makes up at least 10 wt.%, more preferably at least 20 wt.%, and still more preferably at least 40 wt.% of the polyethylene composition.

The polymer composition of the present invention further comprises a copolymer of ethylene with a silane groups-containing comonomer (B) having a content of silane groups-containing comonomer of not more than 5.0 wt%,. Preferably, the copolymer of ethylene with a silane groups-containing comonomer (B) comprises, or consists of an ethylene copolymer containing hydrolysable silane-groups and/or an ethylene copolymer with monomer units comprising (meth-)acrylate groups.

The copolymer (B) preferably has a content of silane groups-containing comonomer of not more than 5 wt.%, more preferably 3 wt.%, even more preferably 2 wt.%. The content of silane groups-containing copolymer is preferably at least 20 wt.%, more preferably at least 40 wt.%. Preferred ranges are from 30 to 70 wt.%, more preferably from 40 to 60 wt.%, all values based on the total weight of the copolymer (B) and divided by the total weight of all polymer fractions.

The copolymer of ethylene with a silane groups-containing comonomer (B) preferably has a MFR$_2$ of not more 10 g/10 min, more preferably not more than 4 g/10 min, even more preferably not more than 1.5 g/10min.

The copolymer of ethylene with a silane groups-containing comonomer (B) preferably has a density of at least 860 kg/m$^3$, more preferably at least 900 kg/m$^3$, even more preferably at least 920 kg/m$^3$.

The silane groups-containing comonomer is preferably an unsaturated silane compound represented by the formula

$$R^1SiR^2_qY_{3-q} \qquad (I)$$

wherein

R$^1$ is an ethylenically unsaturated hydrocarbyl, hydrocarbyloxy or (meth)acryloxy hydrocarbyl group,

each R$^2$ is independently an aliphatic saturated hydrocarbyl group,

Y which may be the same or different, is a hydrolysable organic group and

q is 0, 1 or 2.

Special examples of the unsaturated silane compound are those wherein R$^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R$^2$, if present, is a methyl, ethyl, propyl, decyl or phenyl group.

Further suitable silane compounds are e.g. gamma-(meth)acryloxypropyl trimethoxysilane, gamma(meth)acryloxypropyl triethoxysilane, and vinyl triacetoxysilane, or combinations of two or more thereof.

A preferred unsaturated silane compound is represented by the formula

$$CH_2=CHSi(OA)_3 \qquad (II)$$

wherein each A is independently a hydrocarbyl group having 1-8 carbon atoms, preferably 1-4 carbon atoms.

Preferred compounds are vinyl trimethoxysilane, vinyl bismethoxyethoxysilane, or vinyl triethoxysilane.

It is known to crosslink polyolefins by means of additives as this improves the properties of the polyolefin such as mechanical strength and chemical heat resistance. Cross-linking may be performed by condensation of silanol groups contained in the composition, which can be obtained by hydrolysation of silane groups. A silane-group containing compound can be introduced as a crosslinkable group e.g. by grafting the silane compound onto a polyolefin, i.e. by chemical modification of the polymer by addition of silane groups mostly in a radical reaction, or by copolymerisation of olefin monomers and silane-group containing monomers. Such techniques are encompassed herein and are known e.g. from US 4,413,066, US 4.297,310, US 4,351,876, US 4,397,981, US 4,446,283 US 4,456,704, EP 1 824 926 A1 and EP 2 508 558 A1. If using a graft polymer, this may be produced e.g. by any of the techniques described in US 3,646,155 and US 4,117,195, respectively.

The crosslinkable polymer composition according to the invention may further comprise a polyolefin, preferably a linear low density ethylene polymer or copolymer grafted or copolymerized with an unsaturated carboxylic acid or a derivative thereof, and/or an elastomeric ethylene copolymer.

The unsaturated carboxylic acid may be selected from maleic acid or its anhydride. The content of the unsaturated carboxylic acid, preferably maleic acid or its anhydride may range of from 0.1 to 10 wt.%, based on the total weight of the copolymer.

The elastomeric ethylene copolymer may be e.g. a very low density copolymer, preferably a copolymer of ethylene and 1-octene. It may preferably have a density of not more than 910 kg/m$^3$, even more preferably in the range of from 860 to 890 kg/m$^3$ and a MFR$_2$ in the range of from 0.1 to 50 g/10 min.

In addition to the polymeric components, usual additives for utilization with polyolefins, such as pigments (e.g. carbon black), stabilizers (e.g. antioxidant agents), and/or UV absorbers, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of less than 4 wt%, more preferably not more than 1 wt%, even more preferably in an amount of from 0.1 to 0.8 wt%, based on the weight of the total composition.

Furthermore, preferably in the polyethylene composition comprising carbon black, the copolymer of ethylene and hexene may have a content of units derived from hexene-1 from 0.9 to 1.45 mol%, more preferred of 0.95 to 1.30 mol%, still more preferably of 1.0 to 1.25 mol%, still more preferably of from 1.03 to 1.24 mol% and particularly preferably of from 1.04 to 1.23 mol%.

Still further, preferably in the polyethylene composition comprising carbon black, the copolymer of ethylene and hexene may have a number average molecular weight of 9,000 g/mol or higher, preferably of 9,300 g/mol or higher.

It is preferred that in the polyethylene composition comprising carbon black the copolymer of ethylene and hexene has a total content of units derived from hexene-1 of 0.50 to 0.70 mol%, preferably of 0.52 to 0.69 mol% and more preferably of 0.54 to 0.67 mol%.

In a further embodiment of the present invention, the polyethylene composition does not comprise carbon black.

The crosslinkable polymer composition of the invention may further comprise a filler, which preferably is a metal carbonate and/or a metal hydroxide. An even more preferred filler may be ground or precipitated magnesium hydroxide. Another preferred filler is calcium carbonate which may be coated with stearic acid and which may have an average particle size of from 0.5 to 10. $\mu$m. The filler may preferably be contained in an amount of from 10 to 65 wt%, more preferably 20 to 40 wt.%, even more preferably at least 25 wt.%, based on the total weight of the composition. The above upper and lower limits may be combined with each other in every combination,

The crosslinkable polymer composition according to of the invention may preferably further comprise a UV stabiliser and/or an antioxidant and/or a pigment.

The UV stabilizer may be a hindered amine light-stabilizer (HALS), selected from Chimassorb® 944, Tinuvin® 622, Tinuvin® 770 and mixtures thereof. Above that, any of the UV stabilizers, preferably HALS compounds recited in EP 3 622 541 A1 may be used. Two or more UV stabilizers may be combined. Any of the above mentioned UV stabilizers may also be combined with one or more UV absorbers, such as benzotriazoles, benzophenones, triazines, or phenolic compounds. Any of the UV absorbers recited in EP 19 191 837.4 may be used.

The UV stabilizer may be contained in an amount of from 0.1 to 2 wt.%, more preferably 0.2 to 1.5 wt.%, even more preferably 0.3 to 1 wt.%., based on the total weight of the composition.

An antioxidant may be selected e.g. from sterically hindered phenols (e.g. Irganox 1010 (CAS no 128-37-0), Irganox 1076 (CAS no 2082-79-3), Irganox 1035 (Cas no 41484-359), sulfur-containing antioxidants (e.g. Irganox PS 802 (Cas no 693-36-7), Irganox PS 800 (Cas no 2500-88-1), phosphites/ phosphonites (e.g. Irgafos 168 (Cas no 31570-04-4), Irgafos P-EPQ (Cas no 38613-77-3), nitrogen-containing antioxidants (e.g. Naugard 445 (Cas 10081-67-1), Vulcanox HS/LG (cas no 26780-96-1). A combination of two or more may be used.

The antioxidant may be contained in an amount of from 0.1 to 2 wt.%, more preferably 0.2 to 1 wt.%, even more preferably 0.3 to 0.5 wt.%, based on the total weight of the composition.

A pigment may be selected e.g. from blue, green or orange pigments. A particularly preferred pigment is titan dioxide. Preferably, the total amount of pigments different form carbon black present in the polyethylene composition may be up to 5 wt.%, more preferably 3 to 5 wt.%, even more preferably 1 wt.% or below, or 0.001 to 2 wt.%, of the total composition. A preferred pigment is carbon black. In case of carbon black, it may be contained in an amount of from 0.001-5 wt.%.

The invention is further related to a process for the production of a polyethylene composition according to any of the above described embodiments wherein the high density ethylene homo- or copolymer (A) is produced in a multi-stage process and is compounded with the copolymer of ethylene with a silane groups-containing comonomer (B).

A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the fractions (A), (B) and possibly a further fraction (C) are polymerized at different stages of the multi-stage process in any order. It is thereby preferred that the fractions (A), and (B) and possibly (C) are polymerized in subsequent stages. More fractions may also be produced in the copolymer.

It is preferred that the high density ethylene homo- or copolymer (A) in the polymer composition according to the invention is polymerized in at least one slurry phase reactor and at least one gas phase reactor.

In a preferred embodiment fraction (A) is polymerized in a slurry phase reactor, preferably a loop reactor, and fraction (B) is polymerized in a gas phase reactor in any order. If a copolymer comprising fractions (A), (B) and (C) is produced, preferably fractions (A) and (B) are polymerized in a slurry phase reactor, preferably a loop reactor, and fraction (C) is polymerized in a gas phase reactor. The multistage process may preferably further comprise a prepolmerization stage.

In any order denotes that there is no preferred order in which the subsequent polymerization stages of the multi-stage process are arranged.

Optionally, the reaction stage conducted in the slurry phase reactor is thereby preceded by a prepolymerization stage. Detailed conditions are described in EP 1 655 333 A1.

The multistage process can also be conducted in two reaction stages conducted in slurry, preferably loop reactors, followed by a reaction stage conducted in a gas phase reactor.

In one preferred embodiment of the process according to the invention, fraction (A) is polymerized in the first reaction stage.

It is thereby preferred that fraction (B) is polymerized in the second reaction stage in the presence of fraction (A).

If fraction (C) is present, it is preferably polymerized in the third reaction stage in the presence of fractions (A) and (B).

The low molecular weight polymer (e.g. fraction (A)) can be prepared in the first polymerization step and the high molecular weight polymer (e.g. fraction (B)) in the second polymerization step. This can be referred to as the normal mode and is preferred.

The HMW polymer fraction (B) may also be prepared in the first polymerization step and the LMW polymer fraction (A) in the second polymerization step. This can be referred to as the reverse mode.

If the LMW fraction is produced in the first polymerization step, the melt flow rate of the first ethylene fraction (A) can be directly measured as described herein. If the LMW fraction is produced in the second polymerization step, the melt flow rate of the LMW ethylene fraction (A) can be calculated on the basis of the weight ratios of the LMW fraction and the HMW fraction and the molecular weight of the total polyethylene composition.

In addition, subtracting GPC curves, when fractions of each polymer are known is also possible for determining melt flow rate of the polymer produced in the second stage of a multi-stage polymerization process.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

As the catalyst system, any system of catalyst and optionally cocatalyst can be used suitable for polymerising polyethylene resins. Especially suitable are Ziegler-Natta catalyst systems. In a preferred embodiment, the polymerisation is carried out in the presence of a Ziegler-Natta catalyst. Suitable Ziegler-Natta catalysts preferably contain a magnesium compound, an aluminum compound and a titanium compound supported on a particulate support.

A particularly preferred catalyst system is described in EP 1 378 528 A1.

The copolymer of ethylene with a silane groups-containing comonomer (B) can be produced by a high pressure copolymerization process, such as described e.g. in EP 2 508 566 A1. Hydrolysable silane groups may be introduced into the polymer by copolymerization of ethylene together with a silane groups-containing comonomer or by grafting a silane groups-containing compound to a polymer. Grafting is a chemical modification of the polymer by addition of silane groups containing compound usually in a radical reaction. Such silane groups containing comonomers and compounds are well known in the field and e.g. commercially available. The hydrolysable silane groups are typically then crosslinked by hydrolysis and subsequent condensation in the presence of a silanol condensation catalyst and water in a manner known in the art. Silane crosslinking techniques are known and described e.g. in US 4,413,066 , US 4.297.310 , US 4,351,876 , US 4,397,981 , US 4,446,283, US 4,456,704, EP 1 824926 A1 and EP 2 508 558 A1.

The crosslinkable polymer composition of the invention may be used in a wire or cable for increasing track resistance. Thus, the present invention further relates to a track-resistant wire or cable, preferably a power cable or an optical cable comprising at least one layer comprising the above-described crosslinkable polymer composition. Preferably, said at least one layer is a jacket layer or a sheath layer or an insulating layer.

It is further preferred that the ethylene polymer is present in a wire or cable in an amount as high as possible, i.e. apart from optional further constituents, such as the above filler, stabilizers and/or carbon black.

When producing the wire or cable material, preferably the sheath/jacket/insulating material, the ingredients thereof, such as ethylene polymer, magnesium hydroxide and/or calcium carbonate, carbon black and optional additives, should be mixed intimately in order to obtain a composition as homogeneous as possible to produce, in a preferred embodiment, the outer sheath of an optical cable

Compounding of a sheath material is preferably carried out according to the method described in WO 98/15591. According to this method, the filler and the carbon black may be mixed into the polymeric material in two or more separate steps by letting the polymer pass through the viscosity cross-over stage two or more times i.e. each step implies a separate compounding operation mixer or extruder. Both ingredients in the form of a fine powder are added in the desired proportion in order to get best result and to incorporate the ingredients as homogeneously into the sheath material as possible.

The compounding can also be performed in a common compounding unit, such as a double screw compounder, e.g. those commonly supplied by Werner & Pfleiderer and Berstorf, Banbury mixers, Farrel Pominis FCM mixer, or Buss co-kneaders.

The powder should have a size as low as practically possible. Thus, the filler, preferably magnesium hydroxide may preferably have a median particle size dso of from 1 to 10 μm, more preferably of from 1.5 to 6 μm. The carbon black may preferably have a nominal particle size of 10-30 nm, more preferably of 20 nm. The particle size may be determined according to the method described in the experimental section.

The crosslinkable polymer composition according to the invention may preferably have a tensile strength, determined according to ISO 527-2, of at least 12.5 MPa, more preferably at least 21.5 MPa.

The crosslinkable polymer composition according to the invention may preferably have an elongation at break, determined according to ISO 527-2, of at least 50%, more preferably at least 100%, even more preferably of at least 300%.

The crosslinkable polymer composition according to according to the invention may preferably have a UV resistance in terms of an elongation of at least 50% after 1000 h ageing, more preferably at least 100%, determined according to the Sepap UV ageing test, measured in accordance with NFC62-062-2 on 1 mm plaques.

The crosslinkable polymer composition of the invention may be crosslinked in the presence of a crosslinking agent or in the presence of moisture and a condensation catalyst. Known technologies for moisture curing in the presence of a condensation catalyst are described in the references cited above.

**Experimental Part**

**A. Measuring methods**

The following definitions of terms and determination methods apply for the above general description of the invention as well as to the examples below, unless otherwise defined.

**(1) Melt Flow Rate (MFR)**

The MFR can be measured according to ISO 1133 (Davenport R-1293 from Daventest Ltd). MFR values can be measured at three different loads 2.16 kg ($MFR_{2.16}$), 5 kg ($MFR_5$) and 21.6 kg ($MFR_{21}$) at 190°C.

**(2) Density**

The density can be measured according to ISO 1183-1 - method A (2019). Sample preparation can be done by compression moulding in accordance with ISO 1872-2:2007.

**(3) Tracking test**

The Tracking test was performed in accordance with IEC60587 (2007), method 2A "stepwise tracking voltage" with failure criterion A IEC60567 (2007) prescribes that exceeding 60 mA does not occur sooner than the third voltage step. Five plaques were measured for all materials and the pass percent is calculated on the number of plaques passing the respective kV level. The test was performed at 4.5 kV for one hour and at 4.75 kV for one hour, at 5.0 kV for one hour and at 5.25 kV for one hour, or at 5.75kV for one hour and at 6 kV for one hour, without current exceeding 60 mA.

Plaques (6x150x180 mm) were prepared for the tracking tests with compression moulding (Collin R 1358, edition: 2/060510) according to ISO 293. The pellets were pressed between two Mylar film sheets and positioned in a steel frame with the correct shape and dimensions (140x150x3 mm). The samples were pressed by applying 20 bar for a minute at 200°C, followed by 200 bars pressure for 5 minutes at the same temperature. The remaining compression was done at the same high pressure for 9 minutes at a cooling rate of 15°C/min. The amount of pellets used for each plaque was calculated using the density of the material with an excess of 10 wt.-%.

**(4) Median Particle Size ($d_{50}$)**

Median particle size dso can be measured by laser diffraction (ISO 13320), dynamic light scattering (ISO 22412) or sieve analysis (ASTM D1921-06). For the metal hydroxide used in the working examples, the determination of the median particle size dso was conducted by laser diffraction according to ISO 13320.

**(5) Manufacture of tape used for determination of tensile strength, elongation at break, tracking and UV ageing**

For determining the tensile strength and elongation at break, tapes (1.8 mm) were produced on a Collin Teach-Line E20T tape extruder with a 4.2:1, 20D compression screw with a 20 mm diameter. The temperature profile for Polymer A was 150/160/170°C and the screw speed was 55 rpm. For Polymer B the temperature profile was 150/ 180/ 200 with a screw speed of 55 rpm.

Prior to hot-set testing, the tapes were crosslinked in water at 90°C for 24 hours.

**(6) Tensile Testing**

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50 ± 5 % at a temperature of 23°C for at least 16 hours before the test. The test specimen were placed vertically between clamps with a distance of 50 ± 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

**(7) UV ageing**

The UV ageing was performed in accordance with NFC62-062-2 on 1 mm thick dumbbells. Accordingly, it was conducted in a Sepap (Mercury vapor lamps) oven at 60°C.

**(8) Flame retardant testing**

A covered conductor overhead cable was produced from a track resistant blend IE5 (shown in Table 2 below). This cable was tested according to single vertical flame test according to EN60332-1 and UL 1581 single wire flame tests and fulfils the demands according to both standards.
The covered conductor overhead cable consists of an 50 mm$^2$ 7 strand aluminum-conductor with a diameter of 7.8 mm. The blend of IE5 formed the insulation and the track resistant layer had a mean thickness of 6.8 mm. The cable diameter was 21.4 mm.

**(9) Comonomer content of polymers**

Quantitative nuclear-magnetic resonance (NMR) spectroscopy was used to quantify the comonomer content of the polymers.

Hexene content

Quantitative $^{13}$C{$^1$H} NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16384 (16k) transients were acquired per spectrum. This setup was chosen due its high sensitivity towards low comonomer contents.
Quantitative $^{13}$C{$^1$H} NMR spectra were processed, integrated and quantitative properties determined using custom spectral analysis automation programs. All chemical shifts are internally referenced to the bulk methylene signal (δ+) at 30.00 ppm (J. Randall, Macromol. Sci., Rev. Macromol. Chem. Phys. 1989, C29, 201).
Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.
Characteristic signals resulting from isolated 1-hexene incorporation i.e. EEHEE comonomer sequences, were observed. Isolated 1-hexene incorporation was quantified using the integral of the signal at 38.29 ppm assigned to the *B4 sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.46 ppm assigned to the $\alpha\alpha B4B4$ sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.7 ppm assigned to the $\beta\beta B4B4$ sites accounting for the number of reporting sites per comonomer:

$$HEH = 2 * I_{\beta\beta B4B4}$$

Due to the overlap of the signals from the *B4 and *□B4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated, based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2S} + I_{3S} )$$

The relative content of ethylene was quantified using the integral of the bulk methylene ($\delta+$) signals at 30.00 ppm:

$$E = (1/2)*I_{\delta++}$$

The total ethylene comonomer content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H\ [mol\%] = 100 * fH$$

The total comonomer incorporation of 1-hexene in weight percent was calculated from the mole fraction in the

standard manner:

$$H\ [wt\%] = 100 * (\ fH * 84.16) / (\ (fH * 84.16) + ((1-fH) * 28.05)\ )$$

Butene Content

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.84 ppm assigned to the $_*B2$ sites, accounting for the number of reporting sites per comonomer:

$$B = I_{*B2}$$

When characteristic signals resulting from consecutive 1-butene incorporation i.e. EBBE comonomer sequences were observed, such consecutive 1-butene incorporation was quantified using the integral of the signal at 39.4 ppm assigned to the $\alpha\alpha B2B2$ sites accounting for the number of reporting sites per comonomer:

$$BB = 2 * I_{\alpha\alpha B2B2}$$

When characteristic signals resulting from non consecutive 1-butene incorporation i.e. EBEBE comonomer sequences were also observed, such non-consecutive 1-butene incorporation was quantified using the integral of the signal at 24.7 ppm assigned to the $\beta\beta B2B2$ sites accounting for the number of reporting sites per comonomer:

$$BEB = 2 * I_{\beta\beta B2B2}$$

Due to the overlap of the *B2 and *βB2B2 sites of isolated (EEBEE) and non-consecutively incorporated (EBEBE) 1-butene respectively the total amount of isolated 1-butene incorporation is corrected, based on the amount of non-consecutive 1-butene present:

$$B = I_{*B2} - 2 * I_{\beta\beta B2B2}$$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences:

$$B_{total} = B + BB + BEB$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2s} + I_{3s} )$$

The relative content of ethylene was quantified using the integral of the bulk methylene ($\delta+$) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB + (3/2)*S$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B [mol\%] = 100 * fB$$

The total comonomer incorporation of 1-butene in weight percent was calculated from the mole fraction in the standard manner:

$$B [wt\%] = 100 * ( fB * 56.11) / ( (fB * 56.1$$

**B. Materials**

**Polymers**

**Polymer A**

Polymer A is a natural bimodal high density polyethylene produced in accordance with Example 1 of EP 1 327 664 B1. It has melt flow rates of $MFR_2$ of 0.45 g/10min, $MFR_5$ of 1.75 g/10min and $MFR_{21}$ of 38 g/10min. The density is 942 kg/m$^3$ and is produced with 1-butene as comonomer (2 wt-%).

**Polymer B**

Polymer B is a natural bimodal high density polyethylene. It has melt flow rates of $MFR_2$ of < 0.1 g/10min, $MFR_5$ of 0.2 g/10min and $MFR_{21}$ of 6.2 g/10min. The density is 949 kg/m$^3$ and is produced with 1-hexene as comonomer (1.4 wt-%). The production of Polymer B is described below.

**Polymer D**

Polymer D is a linear low density polyethylene grafted with maleic acid anhydride (maleic acid anhydride content = 0.5 to 1.0 wt.-%, $MFR_2$ = 2.0 g/10 min, density = 930 kg/m$^3$), commercially available from HDC Hyundai EP Co., Ltd.

under the tradename Polyglue® GE300C.

**Polymer E**

Polymer E is a very low density copolymer of polyethylene and 1-octene having a density of 883 kg/m$^3$ and a MFR$_2$ of 3.0 g/10 min, commercially available as Queo 8201 from Borealis AG (Austria).

**Polymer F**

Polymer F is an ethylene methyl acrylate copolymer (EMA) having a methyl acrylate content of 25 wt.-%, MFR$_2$ of 0.4 g/10 min and a density of 944 kg/m$^3$, commercially available as OE2325 from Borealis AG (Austria)

**Polymer production**

Catalyst preparation for Polymer A and B

Complex preparation

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1 -hexanol was 1:1.83.

Solid catalyst component preparation

275 kg silica (ES747JR of Crossfield, having average particle size of 20 μm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg TiCl$_4$ was added during 0.5 hours at 45 °C. The slurry was stirred at 40 °C for five hours. The catalyst was then dried by purging with nitrogen.

**Polymer A**

Polymer A is produced in accordance with Example 1 of EP 1 327 664 B1.

**Polymer B**

A loop reactor having a volume of 50 dm$^3$ was operated at a temperature of 70 °C and a pressure of 57 bar. Into the reactor were fed ethylene, propane diluent and hydrogen. Also a solid Ziegler-Natta polymerization catalyst (Lynx 200) was introduced into the reactor together with triethylaluminum cocatalyst so that the molar ratio of Al/Ti was about 15. The estimated production split was 2 wt.%.

A stream of slurry was continuously withdrawn and directed to a loop reactor having a volume of 150 dm$^3$ and which was operated at a temperature of 95 °C and a pressure of 55 bar. Into the reactor were further fed additional ethylene, propane diluent and hydrogen so that the ethylene concentration in the fluid mixture was 3.9 % by mole and the hydrogen to ethylene ratio was 390 mol/kmol. The estimated production split was 16 wt.%. The ethylene homopolymer withdrawn from the reactor had MFR$_2$ of 280 g/10 min.

A stream of slurry from the reactor was withdrawn intermittently and directed into a loop reactor having a volume of 350 dm$^3$ and which was operated at 95 °C temperature and 52 bar pressure. Into the reactor was further added a fresh propane, ethylene, and hydrogen so that the ethylene concentration in the fluid mixture was 3.7 mol-% and the molar ratio of hydrogen to ethylene was 370 mol/kmol. The ethylene homopolymer withdrawn from the reactor had MFR$_2$ of 282 g/10 min. The estimated production split was 27 wt.%.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 85 °C. Additional ethylene and 1-hexene comonomer, nitrogen as inert gas and hydrogen were added so that the molar ratio of hydrogen to ethylene was 7 mol/kmol and the molar ratio of 1-hexene to ethylene was 46 mol/kmol. The estimated production split was 55 wt.%. The polymer had a melt flow rate MFR$_5$ of 0.22 g/10 min and a density of 949 kg/m$^3$.

**Polymeric additives**

**Silane-modified polymers**

The ethylene vinyl silane copolymers were produced in a 660 m long split feed high-pressure tubular reactor (Union Carbide type A-1). The inner wall diameter is 32 mm. Chain transfer agent (propylene), initiators (t-butylperoxy 2 ethylhexanoate (Luperox 26 and air)) and co-monomer (vinyl trimethoxysilane (VTMS)) were added to the reactor system in conventional manner. The polymerisation were performed at a maximum temperature of 310°C and a pressure of 230 MPa. In order to regulate $MFR_{2,16}$ propylene was used as chain transfer agent. The feed of VTMS was regulated in order to produce a copolymer containing the targeted VTMS level.

Catalyst MB-1

A catalyst masterbatch was used, consisting of the crosslinking catalyst dioctyltin di laurate (3.5 wt.%) (Acima DOTL 99) as well as the antioxidants Irganox 1010 (1.8 wt.%), Irganox MD 1024 (1.5 wt.%) and Lowinox TBM6P (1.1 wt.%) mixed into an ethylene ethy lacrylate copolymer (OE3515), commercially available from Borealis AG.
EVS-1 is a moisture curable ethylene vinylsilane copolymer containing 1.35 wt.% VTMS and having a $MFR_2$ of 1 g/10 min, a density of 929 kg/m³.
EVS2 is a moisture curable ethylene vinylsilane copolymer having a $MFR_{2.16}$ of 1.0 g/10 min, a density of 922.5 kg/m³, a VTMS-content of 1.90 wt.%, based on the total weight of the polymer, and a HDTMS-content of 0.85 wt.-% based on the total weight of the polymer.
EVS-3 is a moisture curable ethylene vinylsilane copolymer containing 1.1 wt.% VTMS, and having a $MFR_2$ of 1, and a density of 922.5 kg/m³.

**Fillers**

**MDH-1** is a brucite (ground magnesium hydroxide) (Ecopiren® 3.5C) produced and commercially available by Europiren B.V (Netherlands) having a $d_{50}$ of 3.5 μm, a specific surface area in the range of 7 to 10 m²/g and is coated with 2 wt.% of stearic acid. The chemical composition is: $Mg(OH)_2$ > 92.8 wt.%, CaO < 2,3 wt.%, $SiO_2$ < 1.3 wt.% and $Fe_2O_3$ < 0.13 wt.%.
**MDH-2** is a high purity (99.8 wt.%) precipitated magnesium hydroxide produced and commercially available by Martinswerk Germany under the tradename Magnifin H5HV. It has a $d_{50}$ in the range of 1.7 to 2.1 μm and a specific surface area (BET) of 5 m²/g. It contains a polymeric coating.
**Ca-1** is a calcium carbonate coated with stearic acid (1 wt.%) having an average particle size of 1.5 μm. It is commercially available from Omya AG, Switzerland under the designation "Omya® EXH 1 SP-OM".

**Additives**

Chimassorb 944 (Cas no. 106990-43-6) is a Hindered Amine Light Stabilizers (HALS) commercially available from BASF
Tinuvin 783 is a mixture of oligomeric Hindered Amine Light Stabilizers (HALS) commercially available from BASF as Tinuvin 783 FDL.
Irganox 1010 (Cas no. 6683-19-8), Irgafos 168 (Cas no. 31570-04-4) and Irganox MD 1024 (cas no. 32687-78-8) are commercially available antioxidants from BASF.
Lowinox TBM-6P (Cas no. 96-65-5) is a commercially available antioxidant from SIGroup.
Acima DOTL 99 dioctyltin dilaurate commercially available from Dow Chemical Company Limited. (Cas no. 3648-18-8).
Carbon black is Printex Alpha A commercially available from Orion Engineered Carbons.

**Preparation of the polymer compositions**

The polymer compositions according to the inventive examples (IE1 to IE5) ,comparative examples (CE1 to CE5) and also the Catalyst MB-1 were produced by mixing the components together in a BUSS-co-kneader (46 mm) at a screw speed of 225 rpm and at a set temperature of 40, 160, 180, 200°C in the kneading section and at 200°C in the pelletizing extruder.. The mixer screw was heated to 120°C. The extruder screw temperature was 160°C, the barrel heated to 170°C and the speed 4 rpm. The fillers were always added in port 2, while all other components were added in port 1. The amounts of the different components in the polymer compositions and the properties of the polymer compositions according to the inventive examples and the comparative examples can be gathered from Table 1 and 2 below.

**Table 1**

| Component | Unit | CE1 | CE2 | CE3 | CE4 | CE5 |
|---|---|---|---|---|---|---|
| Polymer A | wt.% | 99.45 | | | | |
| Polymer B | wt.% | | | | | |
| EVS-1 | wt.% | | | 97 | | |
| EVS-2 | wt.% | | | | 97 | |
| EVS-3 | wt.% | | | | | 97 |
| CE1 | | | 74.35 | | | |
| Catalyst MB | wt.% | | | 3 | 3 | 3 |
| MDH-1 | wt.% | | | | | |
| MDH-2 | wt.% | | 25 | | | |
| Ca-1 | wt.% | | | | | |
| Irganox 1010 | wt.% | 0.15 | | | | |
| Irgafos 168 | wt.% | 0.05 | 0.1 | | | |
| Calcium stearate | wt.% | 0.05 | 0.05 | | | |
| Chimassorb 944 | wt.% | 0.3 | 0.1 | | | |
| Tinuvin 783 | wt.% | | | | | |
| Carbon Black | wt.% | | 0.4 | | | |
| | | | | | | |
| Properties | | | | | | |
| Tracking (1h 5.75 + 1 h 6 kV) | pass-% | 0 | 0 | 0 | 0 | 0 |
| Tracking (1h 5.0 + 1h 5.25kV) | Pass-% | 0 | 0 | 0 | 0 | 0 |
| Tracking (1h 4.5 + 1h 4.75 kV) | Pass-% | 0 | 100 | 0 | 0 | 0 |
| Hot-Set Elongation | % | Fail | Fail | 40 | 30 | 55 |
| Hot-Set Permanent Deformation | % | Fail | Fail | <+/-5 | <+/-5 | <+/-5 |
| Tensile Strength | MPa | >25 | 20 | 25 | 22 | 19 |
| Elongation | % | >600 | >300 | 380 | 340 | 390 |
| Color | | Natural | Black | Natural | Natural | Natural |
| Elongation post Sepap 1000h | wt.% | - | - | <10 | <10 | <10 |

**Table 2**

| Component | Unit | IE1 | IE2 | IE3 | IE4 | IE5 | IE6 |
|---|---|---|---|---|---|---|---|
| Polymer A | wt.% | | | | | | |
| Polymer B | wt.% | 48.5 | 34.5 | 26.5 | 26.5 | 18.5 | |
| Polymer D | wt.% | | | | | 3.2 | 4 |
| Polymer E | wt.% | | | | 4 | 11 | 11 |
| Polymer F | wt.% | | | 4 | | | |
| EVS-1 (ME4425) | wt.% | | | | | | 41 |

(continued)

| Component | Unit | IE1 | IE2 | IE3 | IE4 | IE5 | IE6 |
|---|---|---|---|---|---|---|---|
| EVS-2 (LE4421) | wt.% | 47.5 | 36.5 | 30.5 | 30.5 | 20.5 | |
| EVS-3 (LE4423) | wt.% | | | | | | |
| Catalyst MB | wt.% | 2.998 | 2.998 | 3 | 3 | 3 | 3 |
| MDH-1 | wt.% | | | 35 | 35 | | 40 |
| MDH-2 | wt.% | | | | | 43 | |
| Ca-1 | wt.% | | 25 | | | | |
| Irganox 1010 | wt.% | | | | | | |
| Irgafos 168 | wt.% | | | | | | |
| Calcium stearate | wt.% | | | | | | |
| Chimassorb 944 | wt.% | | | | | | |
| Tinuvin 783 | wt.% | 1 | 1 | 1 | 1 | 0.8 | 1 |
| Carbon Black | wt.% | 0.002 | 0.002 | | | | |
| Properties | | | | | | | |
| Tracking (1h 5.75 + 1h 6 kV) | pass-% | 0 | 100 | 100 | 100 | 100 | 100 |
| Tracking (1h 5.0 + 1h 5.25 kV) | Pass-% | 100 | 100 | 100 | 100 | 100 | 100 |
| Tracking (1h 4.5 + 1h 4.75 kV) | Pass-% | 100 | 100 | 100 | 100 | 100 | 100 |
| Hot-Set Elongation | % | 49 | 52 | 25 | 36 | - | 30 |
| Hot-Set Permanent Deformation | % | -1,.9 | -0.5 | -5.4 | -1.2 | - | -0.8 |
| Tensile Strength | MPa | 26,.8 | 18.4 | 15.7 | 16.8 | 12.5 | 12.8 |
| Elongation | % | 445 | 354 | 188 | 154 | 345 | 267 |
| Color | | Grey | Grey | Grey | Grey | White | Grey |
| Elongation post Sepap 1000h | wt.% | - | - | - | - | 50 | - |

The above results show that while none of the comparative examples passes the tracking test at 5.0 kV for 1h + at 5.25 kV for 1h or the tracking test at 5.75 kV for 1h + at 6 kV for 1h, only the comparative example CE2 passes the tracking test at 4.5 kV for 1h + at 4.75 kV for 1h. However, CE2 only does so at a high filler loading of 25 wt.% with the disadvantage of poor heat deformation resistance. The inferior heat deformation resistance of CE2 is shown by the failure in the hot set tests in Table 1. However, higher heat deformation resistance is required especially in high temperature environment.

Surprisingly, the polymer composition according to the present invention (IE1 to 5) pass the tracking test at least at 5.0 kV for 1h + 5.25 kV for 1h, and IE2 to IE5 even pass the tracking test at 5.75 kV for 1h + 6 kV for 1h with the addition of magnesium hydroxide or calcium carbonate as a filler and additionally show acceptable mechanical properties and improved heat deformation resistance.

The inventive example IE1 shows that even in the absence of a filler, the composition surprisingly passes the track test at 5.0 kV for 1h, followed by 5.25 kV for 1h and still shows good mechanical properties.

Moreover, the inventive examples show that the combination of a multimodal high density polyethylene with a copolymer of ethylene with a silane groups-containing comonomer surprisingly achieves excellent track resistance and still reaches acceptable or good mechanical properties. This is unexpected as the ethylene vinyl silane copolymer, being produced by high presssure polymerization, has a relativelly low density.

The results further show that the mechanical and tracking performance is improved, if replacing the bimodal ethylene/butene copolymer (CE1) by the especially preferred bimodal ethylene/hexene copolymer (polymer B).

The results of IE3 to IE6 further show that at higher filler loadings (> 25 wt.%), the the addition of a linear low density polyethylene comprising an unsaturated carboxylic acid (polymer D) and/or a very low density polyethylene (polymer E) to the inventive polymer B slightly improves the mechanical performance, but still maintains excellent tracking performance, while even increasing flexibility of the composition.

For IE5 also flame retardant testing has been performed. A covered conductor comprising the composition of IE5 was tested in accordance with the vertical flame test in accordance with EN60332-1 and the single wire flame test in accordance with UL 1581. The cable fulfilled the requirements according to both standards. The material compositions with filler in IE5 can achieve needed fire performance for cables and covered conductors and can suppress or reduce fire spreading. This effect is especially evident at high filler loadings of 40 wt.% or above (IE5).

The further addition of an UV absorber not only achieves high tensile strength and elongation at break, but also leads to an acceptable UV resistance in terms of an elongation of at least 50% after 1000 h ageing (Sepap) (IE5 vs CE3-CE5).

Accordingly, the multimodal polymer composition of the present invention shows a surprisingly improved tracking resistance, combined with good mechanical performance, heat and UV resistance, making it highly suitable in high end wire and cable applications, particularly in optical cables or overhead power cables.

**Claims**

1. A crosslinkable polymer composition comprising

   (A) a high density ethylene homo- or copolymer having a density, determined according to ISO 1183, of at least 930 kg/m$^3$, and

   (B) a copolymer of ethylene with a silane groups-containing comonomer having a content of silane groups-containing comonomer of not more than 4.0 wt%,

   wherein the polymer composition passes the tracking resistance test, determined according to IEC60587 (2007), method 2A at 4.5 kV for 1h and at 4.75 kV for 1h on compression molded plaques prepared according to ISO 11357 and as described herein.

2. The crosslinkable polymer composition according to claim 1, wherein the polymer composition passes the tracking resistance test, determined according to IEC60587 (2007), method 2A at 5.0 kV for 1 h and at 5.25 kV for 1 h, on compression molded plaques prepared according to ISO 11357 and as described herein.

3. The crosslinkable polymer composition according to claim 1 or 2, wherein the high density ethylene homo- or copolymer (A) is a multimodal copolymer of ethylene and hexene having a density of from 930 to 970 kg/m$^3$ and a melt flow rate $MFR_2$, determined according to ISO 1133 at a load of 2.16 kg at 190 °C, of not more than 0.4 g/10 min.

4. The crosslinkable polymer composition according to any one of the preceding claims, wherein the silane groups-containing comonomer in the copolymer of ethylene with silane groups-containing comonomer (B) is selected from the group consisting of vinyl triethoxysilane (VTES), vinyl trimethoxy silane (VTMS), gamma-methacryloxypropyltrimethoxy silane and gamma-methacryloxypropyltriethoxy silane .

5. The crosslinkable polymer composition according to any one of the preceding claims, wherein the polymer composition further comprises a very low density polyethylene having a density of not more than 890 kg/m$^3$.

6. The crosslinkable polymer composition according to any one of the preceding claims, wherein the polymer composition further comprises a linear low density polyethylene copolymerized or grafted with an unsaturated carboxylic acid or its derivative, preferably maleic acid anhydride.

7. The crosslinkable polymer composition according to any one of the preceding claims, wherein the polymer composition further comprises a filler which is a metal carbonate and/or a metal hydroxide, preferably selected from the group consisting of calcium carbonate, ground and precipitated magnesium hydroxide.

8. The crosslinkable polymer composition according to claim 7, wherein the filler is contained in an amount of at least 25 wt.%, based on the total weight of the polymer composition

9. The crosslinkable polymer composition according to any one of the preceding claims, further comprising a UV stabiliser and/or an antioxidant and/or a pigment, and/or
further comprising an ethylene polymer or copolymer grafted or copolymerized with an unsaturated carboxylic acid or a derivative thereof, and/or an elastomeric ethylene copolymer.

10. The crosslinkable polymer composition according to any one of the preceding claims, having a tensile strength, determined according to ISO 527-2, of at least 12.5 MPa, and/or having an elongation at break, determined according to ISO 527-1 and ISO 527-2, of at least 50%.

11. The crosslinkable polymer composition according to any one of the preceding claims, having a UV resistance in terms of an elongation of at least 50% after 1000 h ageing, determined according to the Sepap UV ageing test, measured in accordance with NFC62-062-2 on 1 mm plaques.

12. The crosslinkable polymer composition according to any one of the preceding claims, which has been crosslinked in the presence of a crosslinking agent or in the presence of moisture and a condensation catalyst.

13. A track resistant cable, preferably a power cable or an optical cable, comprising at least one layer of the polymer composition according to any one of claims 1 to 12, preferably the at least one layer being a jacket layer or a sheath layer or an insulation layer.

14. Use of a polymer composition according to any one of claims 1 to 12 in a wire or cable for increasing track resistance, and/or
for increasing fire retardancy along the length of the wire or cable.

15. Method for manufacturing a polymer composition according to any one of claims 1 to 12, comprising a step of compounding or dry blending the high density ethylene homo- or copolymer (A) and the copolymer of ethylene with a silane groups-containing comonomer (B).

Europäisches
Patentamt
European
Patent Office
Office européen
des brevets

# EUROPEAN SEARCH REPORT

Application Number

EP 20 21 7586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 256 593 A1 (BOREALIS TECH OY [FI]) 13 November 2002 (2002-11-13) * tables 1-4 * | 1-12 | INV. C08L23/08 H01B3/44 C08L43/04 C08F210/16 |
| A | EP 1 103 986 A1 (SHAW IND LTD [CA]) 30 May 2001 (2001-05-30) * the whole document * | 1-15 | |
| X | US 7 501 469 B1 (GRENIER GARY C [US]) 10 March 2009 (2009-03-10) * the whole document * | 1-15 | ADD. C08K3/22 C08K3/26 C08K5/00 |
| A | WO 2006/054926 A1 (BOREALIS TECH OY [FI]; JUNGQVIST JONAS [SE] ET AL.) 26 May 2006 (2006-05-26) * the whole document * | 1-15 | |
| X | EP 1 512 711 A1 (BOREALIS TECH OY [FI]) 9 March 2005 (2005-03-09) * the whole document * | 1-15 | |
| A,D | US 3 646 155 A (SCOTT HENRY GEORGE) 29 February 1972 (1972-02-29) * the whole document * | 1-15 | TECHNICAL FIELDS SEARCHED (IPC) C08F C08K C08L H01B |

The present search report has been drawn up for all claims

| Place of search | Date of completion of the search | Examiner |
|---|---|---|
| Munich | 5 July 2021 | Balmer, J |

EPO FORM 1503 03.82 (P04C01)

## ANNEX TO THE EUROPEAN SEARCH REPORT
## ON EUROPEAN PATENT APPLICATION NO.

EP 20 21 7586

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2021

| Patent document cited in search report | | Publication date | Patent family member(s) | | | Publication date |
|---|---|---|---|---|---|---|
| EP 1256593 | A1 | 13-11-2002 | AT | 475677 | T | 15-08-2010 |
| | | | CN | 1537119 | A | 13-10-2004 |
| | | | EP | 1256593 | A1 | 13-11-2002 |
| | | | IL | 158429 | A | 03-06-2007 |
| | | | US | 2004167293 | A1 | 26-08-2004 |
| | | | WO | 02096962 | A1 | 05-12-2002 |
| EP 1103986 | A1 | 30-05-2001 | CA | 2290317 | A1 | 24-05-2001 |
| | | | EP | 1103986 | A1 | 30-05-2001 |
| | | | US | 6468583 | B1 | 22-10-2002 |
| US 7501469 | B1 | 10-03-2009 | NONE | | | |
| WO 2006054926 | A1 | 26-05-2006 | AT | 440906 | T | 15-09-2009 |
| | | | BR | PI0419198 | A | 18-12-2007 |
| | | | CN | 101056930 | A | 17-10-2007 |
| | | | EA | 200701083 | A1 | 26-10-2007 |
| | | | EP | 1824926 | A1 | 29-08-2007 |
| | | | JP | 4874257 | B2 | 15-02-2012 |
| | | | JP | 2008520761 | A | 19-06-2008 |
| | | | PL | 1824926 | T3 | 26-02-2010 |
| | | | US | 2008269424 | A1 | 30-10-2008 |
| | | | WO | 2006054926 | A1 | 26-05-2006 |
| EP 1512711 | A1 | 09-03-2005 | BR | PI0414113 | A | 31-10-2006 |
| | | | CN | 1845950 | A | 11-10-2006 |
| | | | CN | 102140198 | A | 03-08-2011 |
| | | | EA | 200600541 | A1 | 25-08-2006 |
| | | | EP | 1512711 | A1 | 09-03-2005 |
| | | | ES | 2439095 | T3 | 21-01-2014 |
| | | | JP | 5201567 | B2 | 05-06-2013 |
| | | | JP | 2007504309 | A | 01-03-2007 |
| | | | US | 2007161758 | A1 | 12-07-2007 |
| | | | WO | 2005023908 | A1 | 17-03-2005 |
| | | | ZA | 200601279 | B | 30-05-2007 |
| US 3646155 | A | 29-02-1972 | BE | 794718 | Q | 16-05-1973 |
| | | | DE | 1963571 | A1 | 29-10-1970 |
| | | | FR | 2030899 | A5 | 13-11-1970 |
| | | | GB | 1286460 | A | 23-08-1972 |
| | | | SE | 368211 | B | 24-06-1974 |
| | | | US | 3646155 | A | 29-02-1972 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 22193583 A
- EP 1267189 A1
- WO 9305424 A1
- JP 2004010864 A
- WO 9212182 A
- EP 040992 A
- EP 041796 A
- EP 022376 A
- EP 0887379 A
- US 4413066 A
- US 4297310 A
- US 4351876 A
- US 4397981 A
- US 4446283 A
- US 4456704 A
- EP 1824926 A1
- EP 2508558 A1
- US 3646155 A
- US 4117195 A
- EP 3622541 A1
- EP 19191837 A
- EP 1655333 A1
- US 4582816 A
- US 3405109 A
- US 3324093 A
- EP 479186 A
- US 5391654 A
- EP 1378528 A1
- EP 2508566 A1
- WO 9815591 A
- EP 1327664 B1

**Non-patent literature cited in the description**

- *CHEMICAL ABSTRACTS, 128-37-0*
- *CHEMICAL ABSTRACTS, 2082-79-3*
- *CHEMICAL ABSTRACTS, 41484-359*
- *CHEMICAL ABSTRACTS, 693-36-7*
- *CHEMICAL ABSTRACTS, 2500-88-1*
- *CHEMICAL ABSTRACTS, 31570-04-4*
- *CHEMICAL ABSTRACTS, 38613-77-3*
- *CHEMICAL ABSTRACTS, 10081-67-1*
- *CHEMICAL ABSTRACTS, 26780-96-1*
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201
- **CASTIGNOLLES, P. ; GRAF, R. ; PARKINSON, M. ; WILHELM, M. ; GABORIEAU, M.** *Polymer,* 2009, vol. 50, 2373
- *CHEMICAL ABSTRACTS, 106990-43-6*
- *CHEMICAL ABSTRACTS, 6683-19-8*
- *CHEMICAL ABSTRACTS, 32687-78-8*
- *CHEMICAL ABSTRACTS, 96-65-5*
- *CHEMICAL ABSTRACTS, 3648-18-8*